# EUROPEAN PATENT SPECIFICATION

(11) **EP 0 726 215 B1**
(45) Date of publication and mention of the grant of the patent: **03.05.2000**
(21) Application number: 96200300.0
(22) Date of filing: 09.02.1996
(51) Int. Cl.: B65G 19/14, B65G 23/06

(54) **Conveyor installation for bulk goods**
Fördervorrichtung für Schüttgüter
Installation de transport pour produits en vrac

(30) Priority: 09.02.1995 NL 9500241
(43) Date of publication of application: 14.08.1996
(73) Proprietor: ESI Engineers & Contractors B.V., 1440 BA Purmerend (NL)
(72) Inventor: van Wijk, Lambert Arjen, NL-7511 AL Enschede (NL)
(74) Representative: de Bruijn, Leendert C.

(56) References cited:
- US-A- 1 503 716
- US-A- 2 235 991

## Description

The invention relates to a conveyor installation for bulk goods, comprising at least one pocketed sheave which is rotatable about its centre line, which pocketed sheave is provided with an outer running surface around which a continuous element, such as a cable or chain, is guided which carries regularly spaced conveyor discs which can be accommodated in the pockets of the pocketed sheave, which continuous element is drivable by the pocketed sheave in such a way that, in the drive position, at least one of the conveyor discs on the continuous element is always in contact with a striking surface associated with the pocket in which said conveyor disc is accommodated.

A conveyor installation of this type is disclosed in Netherlands Patent Application NL-A 7 307 491. In the case of this known installation both the ascending and the descending part of the continuous element carrying the conveyor discs are run in a tube which has an inlet and an outlet for the bulk goods. When the conveyor installation is in operation, the conveyor discs in the ascending part feed the bulk goods to be conveyed from the inlet to the outlet.

With this conveyor movement, the continuous element is exposed to tensile stresses, as a result of which stretch occurs. The consequence of this is that the spacing between two successive conveyor discs becomes larger. The spacing between the conveyor discs must be prevented from becoming so large in comparison with the spacing between the pockets in the pocketed sheave that the conveyor discs can no longer be accommodated in the pockets in the correct manner and consequently can tend to lift. As soon as the latter situation does arise, the continuous element runs off the pocketed sheave.

It would be possible to overcome this problem by selecting a relatively large size for each pocket in the circumferential direction of the pocketed sheave. Such a large construction of the pockets would make it possible to compensate for the larger spacing between the conveyor discs. The disadvantage of this embodiment, however, is that the continuous element can then start to slip with respect to the pocketed sheave, as a result of which unacceptable wear phenomena are encountered.

The aim of the invention is, therefore, to provide a conveyor installation of the abovementioned type which does not have these disadvantages. This aim is achieved in that, in radial cross-sections through the centre line of the pocketed sheave, the running surface tapers from a running surface side which has a relatively large circumference to a running surface side which has a relatively small circumference and in that the striking surface is so constructed that the conveyor disc interacting therewith is, in the drive position, continually forced in the direction towards the running surface side which has a relatively large circumference.

The pocketed sheave of the installation according to the invention has a running surface which has different circumferential dimensions. The spacing between the pockets also differs, depending on the position on the running surface. The continuous element is able, depending on the stretch which occurs therein and therefore depending on the spacing between the conveyor discs thereof, always to find a correct circumferential distance on the running surface of the pocketed sheave which is matched to the spacing between the conveyor discs and, consequently, is also able to find a correct spacing of the pockets. The continuous element carrying the conveyor discs is forced towards the correct running surface side, that is to say towards the running surface side which has the correct circumferential dimension, under the influence of the effect exerted by the striking surface on the conveyor discs.

Said effect can be achieved in various ways; according to a very simple embodiment, this effect can be achieved if each striking surface includes a take-up angle with respect to a radial plane defined by the centre line of the pocketed sheave, viewed in a tangential plane, such that the striking surface is angled towards that side of the pocketed sheave adjoining the running surface side which has a relatively large circumference.

The angled striking surface exerts a force on the conveyor discs, said force depending on the load on the conveyor discs, which has a resultant in the direction towards that side of the pocketed sheave adjoining the running surface side which has a relatively large circumference. As a result, the continuous element moves over the running surface towards that side of the sheave as soon as stretch occurs in the continuous element and, consequently, the spacing between the conveyor discs increases.

With this arrangement, the said resultant of the force exerted by the striking surface on the conveyor discs overcomes the resultant of the force exerted by the running surface on the continuous element, which resultant attempts to move the continuous element towards the running surface side which has a relatively small circumference.

However, as soon as the load on the continuous element decreases and, consequently, the stretch in said element also decreases, the latter resultant overcomes the former resultant, as a result of which the continuous element moves towards that running surface side which has a relatively small circumference.

With the conveyor installation according to the invention it is therefore ensured at all times that the continuous element carrying the conveyor discs is able to interact in the correct manner with the pocketed sheave, without tending to lift.

Preferably, each striking surface includes an angle of inclination with respect to a radial plane defined by the centre line of the pocketed sheave, viewed in a plane perpendicular to the centre line of the pocketed sheave.

Each striking surface can be defined by the surface of a correction block which in each case is arranged on one tooth of the pocketed sheave. A correction block of this type can, for example, be attached by welding to the associated tooth.

In order to be able to provide the desired support for the conveyor discs, each correction block preferably protrudes at either side of the pocketed sheave and has an outer circumference shaped to correspond to the running surface thereof.

Each conveyor disc is preferably convex on its contact surface facing a striking surface; as an alternative, it can be conical on its contact surface facing a striking surface. A convex surface of this type is able to roll away over the striking surface if the conveyor disc is skew, as a result of which the point of engagement of the force exerted by the striking surface on the conveyor disc can be shifted. Thus, a nonlinear increase in the resultant which forces the continuous element towards the running surface side which has a relatively large circumference can be produced.

The invention will be illustrated in more detail below with reference to the appended drawings in which an illustrative embodiment is shown in detail.

Figure 1 shows a partial conveyor installation or disc elevator.

Figure 2 shows a perspective view of the pocketed sheave according to the invention.

Figure 3 shows a side view of the pocketed sheave with continuous conveyor element according to the invention.

Figure 4 shows a detail relating to the production of a restoring moment, according to view IV-IV in Figure 3.

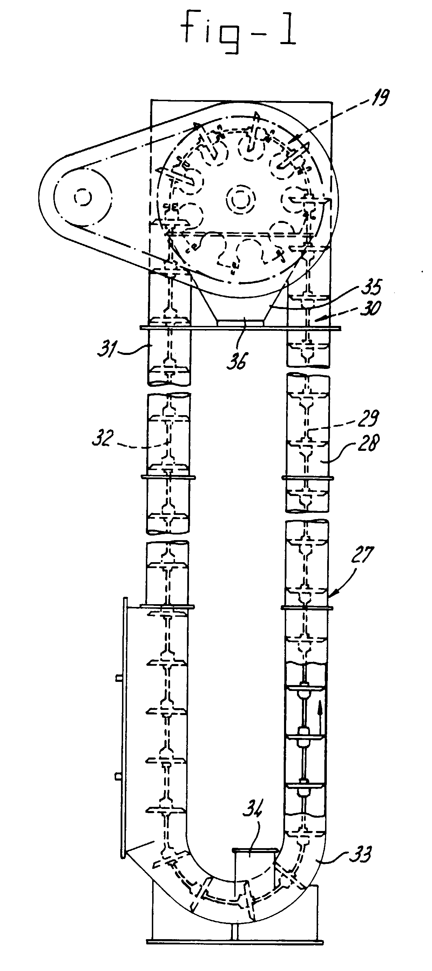

The conveyor installation or disc elevator shown in Figure 1 comprises a tubular housing 27 consisting of a tube 28, in which the ascending part 29 of the flexible conveyor element 30 is located, and a tube 31 in which the descending part 32 is located. The tubes 28, 30 are joined at their bottoms by a U-shaped tube section 33, in which inlet 34 for the bulk goods is located.

The conveyor element 30 is further guided over pocketed sheave 19. A collection trough 35 for the bulk goods, which has outlet 36, is located beneath pocketed sheave 19. When the conveyor discs 5 which have been brought up on the cable 7 are tilted at the level of the pocketed sheave 19, the bulk goods fall into said collection trough.

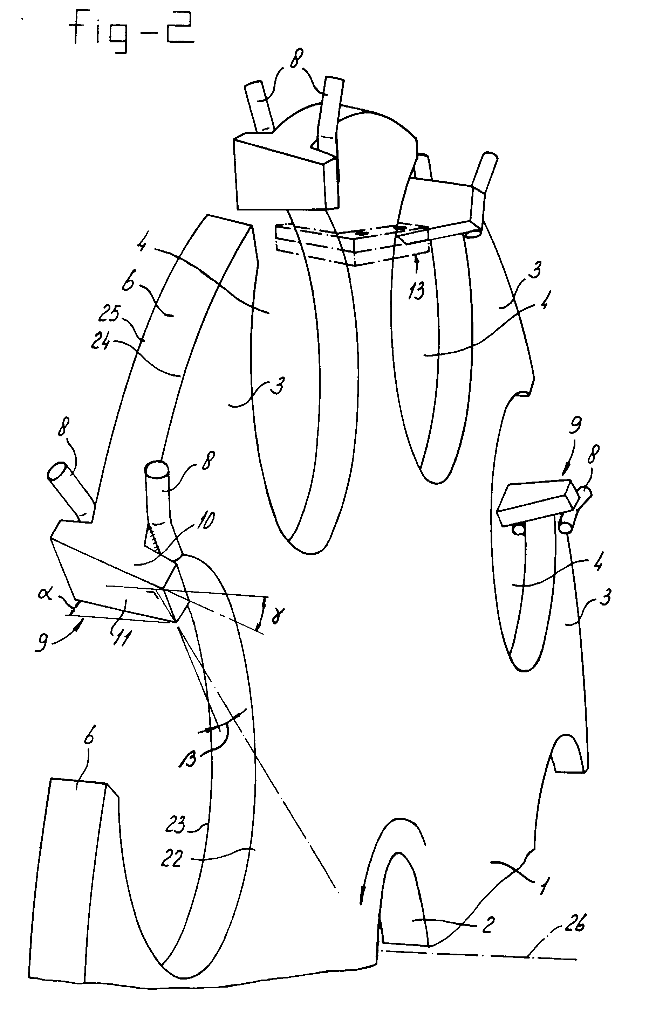

Figure 2 shows part of a pocketed sheave as is used according to the invention for, for example, driving a disc elevator. Said pocketed sheave comprises a sheave body 1, which in the centre has an opening 2 in which a rotary shaft with centre line 26 can be fitted. Sheave teeth 3 are located on the circumference of the pocketed sheave 1, pockets 4 in which conveyor discs 5 of the disc elevator can be accommodated being located between said teeth. The circumferential side of each sheave tooth 3 forms a running surface 6 for a cable or chain 7. The pocketed sheave further comprises guide pins 8 as an emergency provision for holding the cable on the pocketed sheave 19 in the event that a foreign body enters the elevator during operation.

A correction block 9 is arranged on each sheave tooth 3, which correction block has a running surface 10, which coincides with the running surface 6 of the sheave tooth 3, and a striking face 11 on that side of the correction block 9 which faces away from the sheave tooth 3 on which the correction block 9 is mounted.

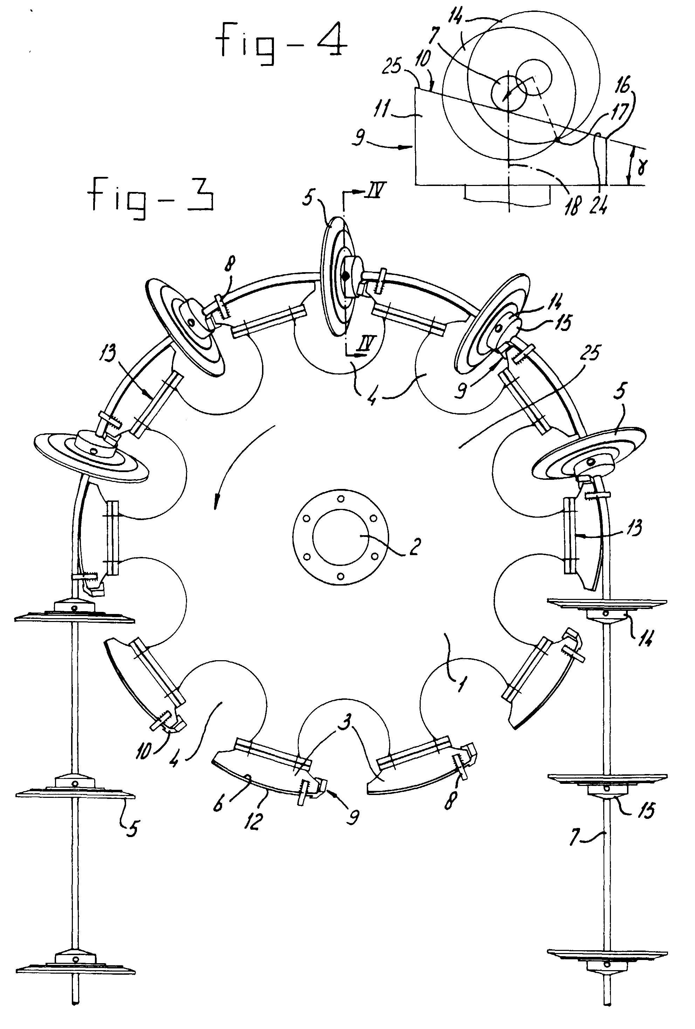

The running surface 6 of the pocketed sheave is of tapered construction and has a running surface side 24 which has a relatively small circumferential dimension as well as a running surface side 25 which has a relatively large circumferential dimension, as can also be seen in the detail shown in Figure 4.

Each striking surface 11 makes a take-up angle a with respect to a radial plane defined by the centre line 26 of the pocketed sheave 19, viewed in a tangential plane, such that the striking surface 11 is directed towards the side 23 of the pocketed sheave 19 adjoining the running surface side 25 which has a relatively large circumference. Moreover, each striking surface 11 makes an angle of inclination β with respect to a radial plane defined by the centre line 26 of the pocketed sheave 19, viewed in a plane perpendicular to the centre line 26 of the pocketed sheave 19.

The angle at which the running surface 6 runs with respect to the centre line 26 of the pocketed sheave 19 is indicated by γ.

The sheave tooth 3 can be detachably mounted on the sheave body 1 by means of fixing means 13.

As can be seen from Figure 3, the running surface 6 of the sheave tooth 3 is coated with a coating material 12. The cable 7 runs over the running surface 6 of the sheave tooth 3, which running surface 6 is coated with said coating material 12. One point on the side 15 of the fixing bush 14 is in contact with the correction block 9. The conveyor disc 5 is located in the cavity or the pocket 4 between two successive sheave teeth 3.

Figure 4 clearly shows the production of a restoring moment which acts on the cable 7. A conveyor disc 5 is mounted by means of a fixing bush 14 on the cable 7. The side 15 of said fixing bush which is in contact with the contact surface 11 of the correction block 9 is dish-shaped. As the cable moves towards the lowest edge 16 of the running surface, the contact point moves between the said side of the fixing bush and the contact surface 11 of the correction block 9 towards a location 17 which lies outside the line 18 between the mid point of the pocketed sheave 1 and the centre line of the cable at the location of the contact surface 11 of the correction block 9 (see position shown by continuous lines). In the position according to Figure 4, a restoring moment is thus produced which is directed anticlockwise and which acts on the cable. The cable 7 is consequently forced to the left (see position shown by broken lines).

## Claims

1. Conveyor installation for bulk goods, comprising at least one pocketed sheave (19) which is rotatable about its centre line, which pocketed sheave is provided with an outer running surface (6) around which a continuous element (7), such as a cable or chain, is guided which carries regularly spaced conveyor discs (5) which can be accommodated in the pockets (4) of the pocketed sheave (19), which continuous element (7) is drivable by the pocketed sheave (19) in such a way that, in the drive position, at least one of the conveyor discs (5) on the continuous element (7) is always in contact with a striking surface (11) associated with the pocket (4) in which said conveyor disc (5) is accommodated, characterised in that, in radial cross-sections through the centre line (26) of the pocketed sheave (19), the running surface (6) tapers from a running surface side (25) which has a relatively large circumference to a running surface side (24) which has a relatively small circumference and in that the striking surface (11) is so constructed that the conveyor disc (5) interacting therewith is, in the drive position, continually forced in the direction towards the running surface side (25) which has a relatively large circumference.

2. Conveyor installation according to Claim 1, wherein each striking surface (11) includes a take-up angle α with respect to a radial plane defined by the centre line of the pocketed sheave (19), viewed in a tangential plane, such that the striking surface (11) is angled towards that side (23) of the pocketed sheave (19) adjoining the running surface side (25) which has a relatively large circumference.

3. Conveyor installation according to Claim 1 or 2, wherein each striking surface (11) includes an angle of inclination β with respect to a radial plane defined by the centre line (26) of the pocketed sheave (19), viewed in a plane perpendicular to the centre line (26) of the pocketed sheave (19).

4. Conveyor installation according to Claim 1, 2 or 3, wherein each striking surface (11) is defined by the surface of a correction block (9) which in each case is arranged on one tooth (3) of the pocketed sheave (19).

5. Conveyor installation according to Claim 4, wherein each correction block (9) protrudes at either side of the pocketed sheave (19) and has an outer circumference shaped to correspond to the running surface (6) thereof.

6. Conveyor installation according to one of the preceding claims, wherein the section of running surface defined by each tooth (3) has a radius of curvature which is smaller than the radius of a circle encompassing the pocketed sheave (19).

7. Conveyor installation according to one of the preceding claims, wherein the pocketed sheave (19) is provided with guide means (8) on its two sides (22, 23).

8. Conveyor installation according to one of the preceding claims, wherein each tooth (3) is detachably mounted on the sheave body (1).

9. Conveyor installation according to one of the preceding claims, wherein each conveyor disc (5) is convex on its contact surface (15) facing a striking surface (11).

10. Conveyor installation according to one of Claims 1-8, wherein each conveyor disc (5) is conical on its contact surface (15) facing a striking surface (11).

11. Conveyor installation according to one of the preceding claims, wherein the running surface (6) is convex between the two sides (22, 23) of the pocketed sheave (19).

## Patentansprüche

1. Fördervorrichtung für Schüttgüter, die wenigstens eine Rolle mit Taschen (19) umfaßt, die um ihre Mittellinie drehbar ist, wobei diese Rolle mit Tasche mit einer äußeren Lauffläche (6) versehen ist, um welche ein kontinuierliches Element (7), wie ein Kabel oder eine Kette, geführt ist, das in gleichmäßigem Abstand Förderscheiben (5) trägt, die in den Taschen (4) der Rolle mit Taschen (19) aufgenommen werden können, wobei das kontinuierliche Element (7) durch die Rolle mit Taschen (19) in der Weise angetrieben werden kann, daß im Antriebszustand wenigstens eine der Förderscheiben (5) auf dem kontinuierlichen Element (7) immer in Kontakt mit einer mit der Tasche (4), in die diese Förderscheibe (5) aufgenommen ist, verbundenen Anschlagfläche (11) steht, dadurch gekennzeichnet, daß in radialem Querschnitt durch die Mittellinie (26) der Rolle mit Taschen (19) die Laufoberfläche (6) sich von einer Laufoberflächenseite (25) mit relativ großem Umfang zu einer Laufflächenseite (24) mit relativ kleinem Umfang verjüngt und die Anschlagfläche (11) so konstruiert ist, daß die damit zusammenwirkende Förderscheibe (5) in der Betriebsstellung ständig in Richtung gegen die Laufflächenseite (25), die einen relativ großen Umfang hat, gezwungen wird.

2. Fördervorrichtung nach Anspruch 1, worin jede Anschlagfläche (11) einen Aufnahmewinkel α in Bezug auf eine radiale Ebene umfaßt, die durch die Mittellinie der Rolle mit Taschen (19), gesehen in einer tangentialen Ebene, definiert ist, so daß die Anschlagfläche (11) gegen die Seite (23) der Rolle mit Taschen (19) geneigt ist, die an die Laufoberflächenseite (25) mit einem relativ großen Umfang angrenzt.

3. Fördervorrichtung gemäß Anspruch 1 oder 2, worin jede Anschlagfläche (11) einen Inklinationswinkel β in Bezug auf eine radiale Ebene umfaßt, die durch die Mittellinie (26) der Rolle mit Taschen (19), gesehen in einer Ebene senkrecht zur Mittellinie (26) der Rolle mit Taschen (19), definiert ist.

4. Fördervorrichtung gemäß Anspruch 1, 2 oder 3, worin jede Anschlagfläche (11) durch die Oberfläche eines Berichtigungsblocks (9) definiert ist, wobei jeder auf einem Zahn (3) der Rolle mit Taschen (19) angeordnet ist.

5. Fördervorrichtung gemäß Anspruch 4, worin jeder Berichtigungsblock (9) auf jeder Seite der Rolle mit Taschen (19) vorspringt und einen äußeren Umfang hat, der entsprechend der Laufoberfläche (6) geformt ist.

6. Fördervorrichtung gemäß einem der vorangegangenen Ansprüche, worin der durch jeden Zahn (3) definierte Abschnitt der Laufoberfläche einen Biegungsradius hat, der kleiner ist als der Radius eines die Rolle mit Taschen (19) umfassenden Kreises.

7. Fördervorrichtung nach einem der vorangegangenen Ansprüche, worin die Rolle mit Taschen (19) mit Führungsmitteln (8) auf ihren beiden Seiten (22, 23) versehen ist.

8. Fördervorrichtung nach einem der vorangegangenen Ansprüche, worin jeder Zahn (3) lösbar auf dem Rollenkörper (1) befestigt ist.

9. Fördervorrichtung nach einem der vorangegangenen Ansprüche, worin jede Förderscheibe (5) auf ihrer gegen die Anschlagfläche (11) gerichteten Kontaktoberfläche (15) konvex ist.

10. Fördervorrichtung nach einem der Ansprüche 1 bis 8, worin jede Förderscheibe (5) in ihrer gegen die Anschlagfläche (11) gerichteten Kontaktoberfläche (15) konisch ist.

11. Fördervorrichtung gemäß einem der vorangegangenen Ansprüche, worin die Laufoberfläche (6) konvex zwischen den Seiten (22, 23) der Rolle mit Taschen (19) ist.

## Revendications

1. Installation de transporteur pour des produits en vrac, comprenant au moins une noix d'entraînement à alvéoles (19) qui peut être entraînée en rotation autour de son axe central, laquelle noix d'entraînement est munie d'une surface de portée extérieure (6) autour de laquelle un élément continu (7), tel qu'un câble ou une chaîne, est guidé, lequel porte des disques transporteurs régulièrement espacés (5) qui peuvent être reçus dans les alvéoles (4) de la noix d'entraînement (19), lequel élément continu (7) peut être entraîné par la noix d'entraînement (19) d'une manière telle que, dans la position d'entraînement, au moins l'un des disques transporteurs (5) de l'élément continu (7) est toujours en contact avec une surface de blocage (11) associée à l'alvéole (4) dans laquelle ledit disque transporteur (5) est reçu, caractérisée en ce que, dans des coupes transversales radiales passant par l'axe central (26) de la noix d'entraînement (19), la surface de portée (6) s'incline depuis un côté de la surface de portée (25) qui présente une circonférence relativement grande jusqu'à un côté de la surface de portée (24) qui présente une circonférence relativement petite et en ce que la surface de blocage (11) est construite de façon telle que le disque transporteur (5) interagissant avec celle-ci est, dans la position d'entraînement, poussé en permanence dans la direction allant vers le côté de la surface de portée (25) qui présente une circonférence relativement grande.

2. Installation de transporteur selon la revendication 1, dans laquelle chaque surface de blocage (11) comprend un angle de rattrapage α par rapport à un plan radial défini par l'axe central de la noix d'entraînement (19), observé dans un plan tangentiel, de sorte que la surface de blocage (11) forme un angle en direction du côté (23) de la noix d'entraînement (19) attenant au côté (25) de la surface de portée qui présente une circonférence relativement grande.

3. Installation de transporteur selon la revendication 1 ou 2, dans laquelle chaque surface de blocage (11) comprend un angle d'inclinaison β par rapport à un plan radial défini par l'axe central (26) de la noix d'entraînement (19), observé dans un plan perpendiculaire à l'axe central (26) de la noix d'entraînement (19).

4. Installation de transporteur selon la revendication 1, 2 ou 3, dans laquelle chaque surface de blocage (11) est définie par la surface d'un bloc de correction (9), lequel dans chaque cas est agencé sur une dent (3) de la noix d'entraînement (19).

5. Installation de transporteur selon la revendication 4, dans laquelle chaque bloc de correction (9) fait saillie des deux côtés de la noix d'entraînement (19) et présente une circonférence extérieure configurée pour correspondre à la surface de portée (6) de celle-ci.

6. Installation de transporteur selon l'une quelconque des revendications précédentes, dans laquelle le tronçon de la surface de portée définie par chaque dent (3) présente un rayon de courbure qui est plus petit que le rayon d'un cercle entourant la noix d'entraînement (19).

7. Installation de transporteur selon l'une quelconque des revendications précédentes, dans laquelle la noix d'entraînement (19) est munie de moyens de guidage (8) sur ses deux faces (22, 23).

8. Installation de transporteur selon l'une quelconque des revendications précédentes, dans laquelle chaque dent (3) est montée de façon amovible sur le corps de noix (1).

9. Installation de transporteur selon l'une quelconque des revendications précédentes, dans laquelle chaque disque transporteur (5) est convexe sur sa surface de contact (15) dirigée vers une surface de blocage (11).

10. Installation de transporteur selon l'une quelconque des revendications 1 à 8, dans laquelle chaque disque transporteur (5) est conique sur sa surface de contact (15) dirigée vers une surface de blocage (11).

11. Installation de transporteur selon l'une quelconque des revendications précédentes, dans laquelle la surface de portée (6) est convexe entre les deux faces (22, 23) de la noix d'entraînement (19).
